Europäisches Patentamt

European Patent Office

Office européen des brevets

(11) Veröffentlichungsnummer: **0 283 715 B1**

# (12) EUROPÄISCHE PATENTSCHRIFT

(45) Veröffentlichungstag der Patentschrift: **15.07.92**

(21) Anmeldenummer: **88102345.1**

(22) Anmeldetag: **18.02.88**

(51) Int. Cl.5: **H04N 1/415**, H04N 1/41

(54) Verfahren zur Codierung von Bildsignalen.

(30) Priorität: **23.03.87 DE 3709094**

(43) Veröffentlichungstag der Anmeldung:
**28.09.88 Patentblatt  88/39**

(45) Bekanntmachung des Hinweises auf die
Patenterteilung:
**15.07.92 Patentblatt  92/29**

(84) Benannte Vertragsstaaten:
**DE FR IT NL**

(56) Entgegenhaltungen:
**EP-A- 0 066 697**      **EP-A- 0 238 254**
**DE-A- 3 546 337**      **DE-A- 3 708 288**
**US-A- 4 644 392**      **US-A- 4 670 851**
**US-A- 4 727 422**

**IEEE TRANSACTIONS ON COMMUNICA-
TIONS, Band COM-32, Nr. 3, März 1984, CHEN
PRATT "Scene Adaptive Coder", Seiten
225-232.**

**SPIE, vol. 594 Image Coding, 1985, page 120.**

(73) Patentinhaber: **ANT Nachrichtentechnik GmbH
Gerberstrasse 33
W-7150 Backnang(DE)**

(72) Erfinder: **Lohscheller, Herbert, Dr. Ing.
Mairichweg 8
W-7152 Aspach(DE)**
Erfinder: **Franke, Uwe, Dipl.-Ing.
Weberstrasse 13
W-5100 Aachen(DE)**

**Beschreibung**

Die Erfindung betrifft ein Verfahren gemäß dem Oberbegriff des Patentanspruchs 1. Ein solches Verfahren ist bekannt aus "Digital Image Processing, William K. Pratt, Wiley - Interscience Publication, New York/Chichester/Brisbane/Toronto, Seiten 471-499". Dort werden verschiedene Verfahren zur Erkennung von Kantenstrukturen in Bildsignalen vorgestellt, die einer diskreten Transformation unterzogen wurden.

Aus "IEEE Transactions on Communications, Vol.Com-32, No. 3, March 1984, Seiten 225-232" ist es bekannt, Bildsignale einer Diskreten Cosinus Transformation zu unterziehen. Um eine niedrige Codierrate zu erhalten, werden die Transformationskoeffizienten in dem Sinne adaptiv quantisiert, daß Blöcken von Koeffizienten, die große Energieanteile enthalten, mehr Quantisierungsschwellen und Codierbits zugeordnet werden als Blöcken mit geringen Energieanteilen.

Aus "Orthogonal Transforms for Digital Signal Processing, N. Ahmed, K.R. Rao, Springer Verlag, Berlin/Heidelberg/New York, Seiten 225-253", ist es bekannt, Bildsignale zur Datenreduktion zu klassifizieren.

Aufgabe der Erfindung ist es, das Verfahren ausgehend vom Oberbegriff des Patentanspruchs 1 so auszugestalten, daß eine Einzelbildübertragung, insbesondere eine Farbeinzelbildübertragung über einen Übertragungskanal mit begrenzter Kapazität ohne Qualitätseinbußen möglich ist. Diese Aufgabe wird durch die Maßnahmen des Patentanspruchs 1 gelöst.

Anspruch 2 zeigt eine vorteilhafte Weiterbildung auf, die die Übertragungsrate erheblich reduziert. Dies ist dadurch möglich, daß für jeden Block eines Bildes ein Satz von Spektralkoeffizienten, der zu einer Klasse gehört, ausgewählt wird und für diese Auswahl nur eine Klassenzugehörigkeitsinformation übertragen werden muß.

Das Verfahren gemäß der Erfindung hat insbesondere den Vorteil, daß sich das übertragene Einzelbild auf der Empfängerseite sehr schnell aufbaut (ca. 2 sec bei einer Übertragungsrate von 64 kbits/s). Die Datenkompression beim Verfahren nach der Erfindung ist so stark, daß die durchschnittliche Bitrate, die zur Codierung der Farbbilder nötig ist, weniger als 0,7 bit per pel (picture element) beträgt.

Anhand der Zeichnungen wird ein Ausführungsbeispiel der Erfindung nun näher erläutert. Es zeigen

| Fig. 1 | die Verfahrensschritte der Erfindung in einem Ablaufdiagramm, |
| Fig. 2 a,b,c | Tabellen der Wahrnehmbarkeitsschwellwerte für die einzelnen Bildkomponenten, |
| Fig. 3 | das Blockschaltbild eines Prädiktors, |
| Fig. 4 | die Anordnung der Referenzwerte für die DC-Prädiktion, |
| Fig. 5 | die Prädiktionskoeffizienten für den DC-Anteil, |
| Fig. 6 | einen Übersichtsplan der Kantenerkennung, |
| Fig. 7 | die Edgepoint Entscheidung, |
| Fig. 8 | den Funktionsablauf der Klassifikation, |
| Fig. 9 | eine Wahrheitstabelle zur Klassenselektion bezüglich der I-Komponente, |
| Fig. 10 | eine Wahrheitstabelle zur Klassenselektion bezüglich der Q-Komponente, |
| Fig. 11 | aus Klassen abgeleitete Terme der Luminanzkomponente y, |
| Fig. 12 | die Bildung der Kardinalzahlen $tk_d$, |
| Fig. 13 | aus Termen gebildete Klasseninformationen $cn_y$, |
| Fig. 14 | den Ablauf der Blockquantisierung, |
| Fig. 15 | den Ablauf der Transmission Coding, |
| Fig. 16 | die Entropiecodierung für die Luminanzkomponente y, |
| Fig. 17 | die Entropiecodierung für die Chromakomponente I, |
| Fig. 18 | die Entropiecodierung für die Chromakomponente Q, |
| Fig. 19 | die Entropiecodierung für AC-Koeffizienten, |
| Fig. 20 | die Codierung der DC Koeffizienten. |

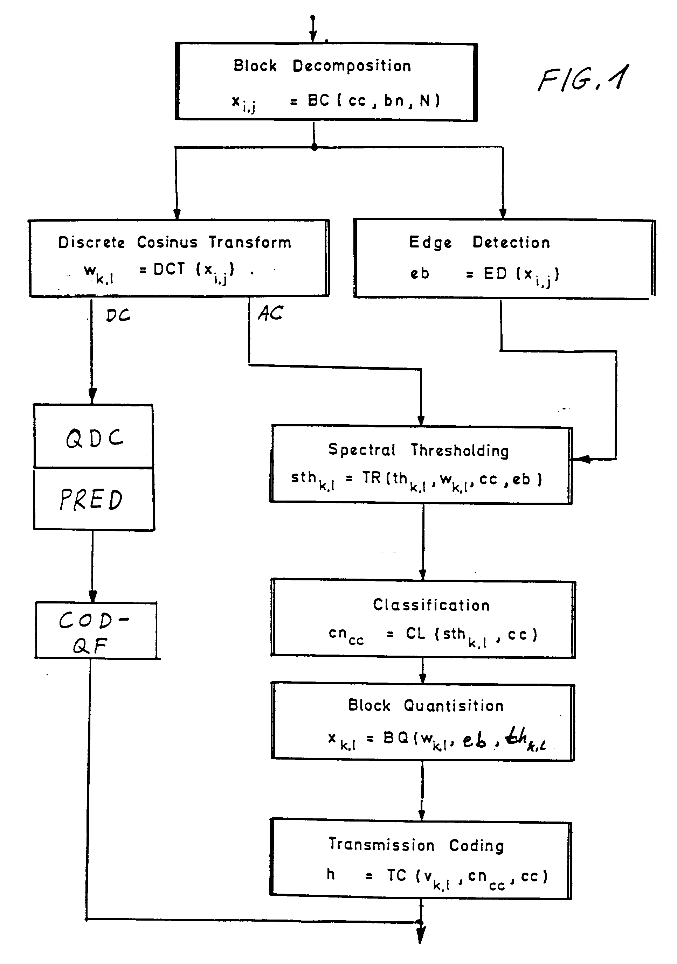

Das Ablaufdiagramm gemäß Fig. 1 zeigt die einzelnen Verfahrensschritte der Erfindung. Das zur Verfügung stehende Bildsignal wird zuerst in Blöcke zerlegt (Block Decomposition). Die bei der Blockbildung erzeugten Teilbildbereiche werden zweckmäßigerweise gleich groß und quadratisch gewählt. Die Teilbildbereiche können durch die Bildelementwerte $x_{i,j}$ vollständig beschrieben werden, wobei i und j Indexvariablen sind, die von 1 bis N laufen. Die Bildelemente lassen sich durch die Blockfunktion BC (cc, bn, N) darstellen, wobei cc die Luminanzkomponente Y oder die Farbkomponenten I und Q, bn die Blocknummer und N die Größe des Blocks Nx N mit N beispielsweise 8 angibt. Die in Blöcke zerlegten Teilbildbereiche werden nun einer Diskreten Cosinus Transformation DCT(Discrete Cosine Transform) unterzogen. Es entstehen dadurch Spektralkoeffizienten $W_{k,l}$ mit k und l als Indexvariablen, die von 1 bis N laufen. Parallel zur DCT wird eine Kantenerkennung ED (Edge detection) vorgenommen, die zu Kantenblockinformationen

$$eb = ED(x_{i,j})$$

führt.

Die DCT Transformation ist hinreichend bekannt, beispielsweise aus IEEE Transactions on Communications, Vol. COM-32, No. 3, March 1984, Seiten 225 bis 232, so daß an dieser Stelle nicht näher darauf eingegangen wird.

Aus den Speichern einer solchen DCT Transformationseinheit werden Gleich- und Wechselanteile getrennt ausgelesen, d.h. die Spektralkoeffizienten stehen blockweise aufgespalten zur Weiterverarbeitung zur Verfügung. Gleichanteile, nachfolgend mit DC bezeichnet, bedeuten in diesem Zusammenhang jeweils mittlere Helligkeitswerte bezüglich der Luminanzkomponente und mittlere Farbsättigungswerte bezüglich der Chromakomponenten für jeden Block von Spektralkoeffizienten. Wechselanteile, nachfolgend mit AC bezeichnet, bilden die jeweiligen örtlichen Abweichungen von diesen mittleren Werten innerhalb eines Blockes für jeden Spektralkoeffizienten.

Bezüglich der AC-Anteile erfolgt nun ein Vergleich der Spektralkoeffizienten mit visuellen Wahrnehmbarkeitsschwellen, die gemäß der Empfindlichkeit des menschlichen Auges gewählt sind, mittels einer Wahrnehmbarkeitsschwellwertentscheidung (Spectral Thresholding), die sich durch die Beziehung

$$Ssth_{k,l} = TR(th_{k,l}, W_{k,l}, cc, eb)$$

beschreiben läßt.

$sth_{k,l}$ (supra-threshold information)

wird als Binärwort mit N x N bits als Ausgangssignal abgegeben. Die Wahrnehmbarkeitsschwellwertentscheidung wird von der Kantenerkennung ED in dem Sinne gesteuert, daß eine Schwellwertreduzierung erfolgt, wenn Kantenstrukturen festgestellt wurden. Die vorgegebenen Wahrnehmbarkeitsschwellwerte $th_{k,l}$ sind für Luminanz- und Chrominanzkomponenten Y, I, Q jeweils verschieden. Für die Luminanzkomponente muß die Auflösung der Schwellwerte im Gegensatz zu den Chromakomponenten relativ hoch sein.

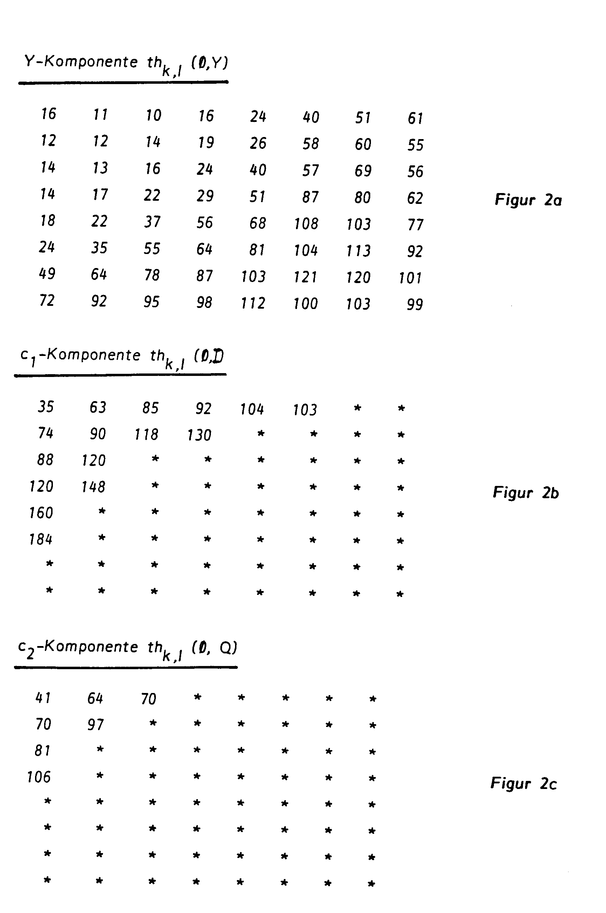

Die Figuren 2a, b und c zeigen die Wahrnehmbarkeitsschwellwerte $th_{k,l}$ für die Y, I, Q-Komponenten eines 8x8 Blockes. Die gekreuzten Stellen bei den Chromakomponenten brauchen nicht berücksichtigt werden, da das menschliche Auge für Farbsignale nicht so empfindlich ist.

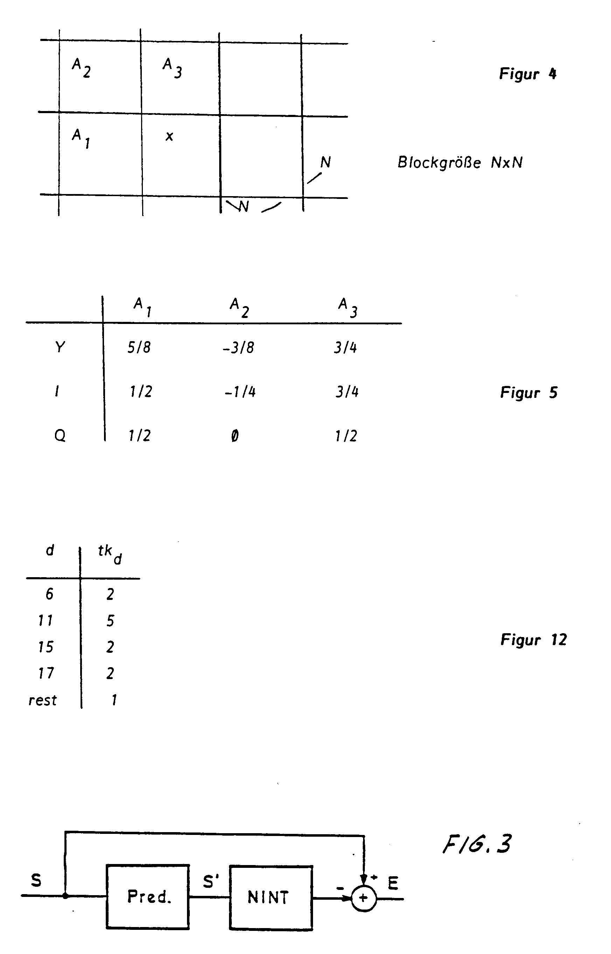

Für die DC-Anteile ist eine solche Schwellwertentscheidung im allgemeinen nicht erforderlich, kann jedoch nach Bedarf vorgenommen werden, insbesondere mit fest vorgegebenen Schwellwerten. Die DC-Anteile werden im Ausführungsbeispiel blockweise linear quantisiert - QDC - und anschließend einem Prädiktor zugeführt. Das Blockschaltbild für einen solchen Prädiktor ist in Fig. 3 dargestellt. Ein Prädiktionswert S′ wird erhalten durch eine gewichtete Summierung von 3 benachbarten DC-Koeffizienten, die zuvor für die Übertragung benutzt wurden. Fig. 4 zeigt schematisch die Anordnung der Referenzwerte $A_1$, $A_2$ und $A_3$ für eine zweidimensionale Prädiktion der DC-Koeffizienten. Die gekreuzte Stelle entspricht dem Prädiktionswert. Die Prädiktionskoeffizienten für $A_1$, $A_2$ und $A_3$ bezüglich der Signalkomponenten Y, I, Q zeigt Fig. 5. Eine Integer(Ganzzahl-)Rundung NINT zur Redundanzreduktion führt nur zu ganzzahligen Prädiktionsfehlern für die Übertragung. Am Ausgang des Prädiktors ist eine Subtrahierstufe angeordnet, die vom Eingangswert S für die Prädiktion das Ausgangssignal der Rundung subtrahiert.

Für den AC-Anteil wird das Ausgangssignal der Wahrnehmbarkeitsschwellwertentscheidung einer Klassifikation (Classification) unterzogen. Diese Klassifikation läßt sich durch den Ausdruck

$$cn_{cc} = CL(sth_{k,l}, cc)$$

beschreiben. Sie ist also von der Supra-threshold-Information und der Signalkomponente cc abhängig.

$cn_{cc}$ bedeutet die Klassennummer einer Signalkomponente. Durch die Klassifikation wird die Zugehörigkeit der Spektralkoeffizienten eines Blockes zu vorher festgelegten Klassen beschrieben. Eine ausführliche Behandlung der Klassifikation erfolgt noch an anderer Stelle.

Nach der Klassifikation wird für die AC-Anteile eine Block-Quantisierung BQ (Block Quantisition) vorgenommen, die zu folgender Beziehung führt:

$$V_{k,l} = BQ(w_{k,l}, th_{k,l}, eb)$$

$V_{k,l}$ stellen quantisierte Spektralkoeffizienten dar. Diese Blockquantisierung kann gegebenenfalls auch für den DC-Anteil vorgenommen werden, wie noch erläutert wird.

Übertragungsdaten werden bezüglich des DC-Anteils durch Codieren der quantisierten Prädiktionsfehler COD-QF aufbereitet und bezüglich der AC-Anteile durch Codieren der blockquantisierten Spektralkoeffizienten $V_{k,l}$ - Transmission Coding. Die Transmission Coding läßt sich durch die Beziehung

$$h = TC(V_{k,l}, cn_{cc}, cc)$$

beschreiben. Sie erfolgt im Sinne einer Entropiecodierung. Durch die Klassifikation werden Zusatzübertragungsdaten gewonnen, die die Zugehörigkeit der Spektralkoeffizienten eines Blockes zu vorher festgelegten Klassen kennzeichnen. Durch Übertragen dieser Zusatzdaten können die Übertragungsdaten anhand der Klassenzugehörigkeit ausgedünnt werden; denn für jene Spektralkoeffizienten, die zu einer Klasse gehören, reicht es aus, nur eine Klassenzugehörigkeitsinformation zu übertragen.

EP 0 283 715 B1

Der in Fig. 1 vorgestellte Übersichtsablauf wird nun näher erläutert. Die DCT läßt sich durch folgende Beziehung ausdrücken:

$$w_{k,l} = \frac{c(k) \cdot c(l)}{N} \sum_{i=1}^{N} \sum_{j=1}^{N} x_{i,j} \cos(2i-1) \cdot (k-1) \frac{\pi}{2N} \cdot$$

$$\cos(2j-1) \cdot (l-1) \frac{\pi}{2N}$$

$$c(n) = \begin{cases} 1 & ; \quad n = 1 \\ \sqrt{2} & \quad n \neq 1 \end{cases}$$

$$i, j, k, l = 1, \ldots, N$$

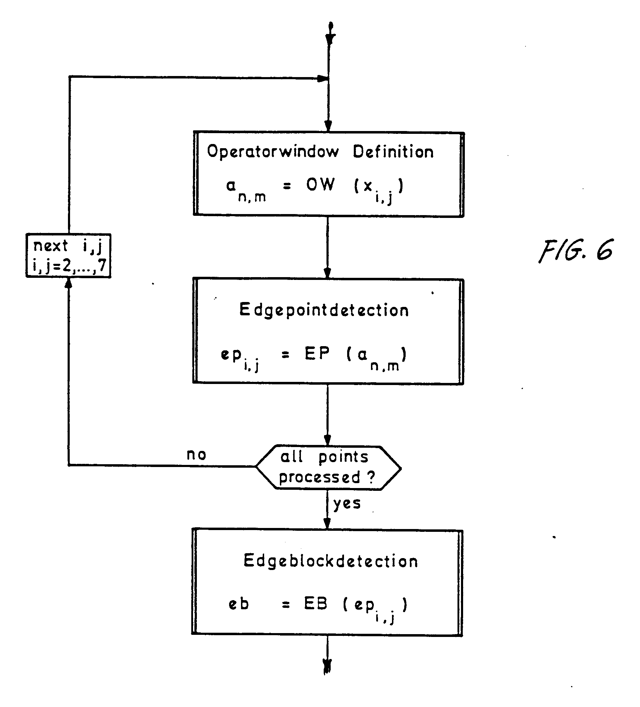

Die Kantenerkennung ist in der DE Patentanmeldung P 35 42 484.2 ausführlich beschrieben, soll hier aber nochmals in allgemeiner Form erläutert werden. Den Übersichtsplan der Kantenerkennung (Edge Detector) zeigt Fig. 6. Zuerst wird ein Operatorfenster definiert (Operator window Definition),

$a_{n,m} = $ OW $(x_{i,j})$,

wobei

$a_{m,n} = X_{i1,j1}$
$m = 1, 2, 3$
$n = 1, 2, 3$
$i1 = i-2+n$
$j1 = j-2+m$ ist, was einer 3x3 Matrix für Spektralkoeffizienten entspricht. Dieses Operatorfenster wird auf eine "Edgepoint detection" EP abgebildet, derart daß "Edge-point"-Koeffizienten $ep_{i,j}$ entstehen.

Die Edgepointdetection läßt sich beschreiben zu:

$$s_{m,n} = \begin{cases} -1 & , \quad a_{m,n} - \overline{m} \leq -\varepsilon \\ 0 & , \quad -\varepsilon < a_{m,n} - \overline{m} < \varepsilon \\ 1 & , \quad a_{m,n} - \overline{m} \geq \varepsilon \end{cases}$$

$$\overline{m} = \frac{1}{8} \left[ \sum_{n=1}^{3} \sum_{m=1}^{3} a_{m,n} - a_{2,2} \right]$$

$$\varepsilon = 3 \ldots \text{ sensitivity threshold}$$

Anschließend erfolgt eine "Edgepoint"-Entscheidung EPD

$ep_{i,j} = $ EPD $(S_{m,n})$

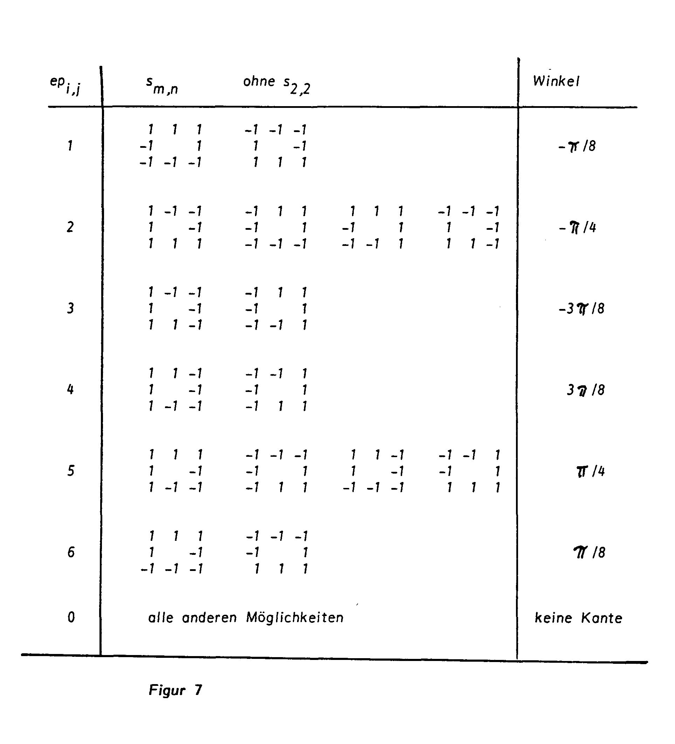

Diese Entscheidung ist in Fig. 7 dargestellt.

Zu jedem $ep_{i,j}$ gehört eine Matrix $S_{m,n}$ (Darstellung ohne $s_{2,2}$), aus deren Elementen -1 und 1 sich Kantenorientierungen in Vielfachen von $\pi/8$ vereinbaren lassen. Der zugehörige Orientierungswinkel der Kanten (angle of edge) ist in Fig. 7 ebenfalls dargestellt.

4

Im Ablauf wird nun untersucht, ob alle Edge points abgearbeitet sind. Ist dies nicht der Fall, wird mit den weiteren Variablen i,j = 2 ... 7 die Entscheidung nochmals vorgenommen.

Nach der Abarbeitung aller Edgepoints erfolgt eine "Edgeblockdetection"

$$eb = EB (ep_{i,j}),$$

die durch folgende Vereinbarungen zu erfolgen hat:

$$eb = \begin{cases} 1 & , & n_r \geq \varepsilon \\ 0 & , & n_r < \varepsilon \end{cases}$$

$$r = 1,2,\ldots,6$$

$$nr = \sum_{i=2}^{7} \sum_{j=2}^{7} \delta(r, ep_{i,j})$$

$$\delta(r, ep_{i,j}) = \begin{cases} 0 & , & r \neq ep_{i,j} \\ 1 & , & r = ep_{i,j} \end{cases}$$

Die Schwellwertentscheidung erfolgt nach folgenden Beziehungen:

$$sth = \begin{cases} 0 & ; & |w_{k,l}| < th_{k,l}(eb, cc) \\ 1 & ; & |w_{k,l}| \geq th_{k,l}(eb, cc) \end{cases}$$

$$th_{k,l}(0, cc) = th_{k,l}(1, cc) * 2$$

Die Wahrnehmbarkeitsschwellwerte
$th_{k,1}(eb, cc)$
wurden schon in den Figuren 2 a,b,c vorgestellt.

Die Klassifikation ist in der DE P 37 08 288.4 ausführlich beschrieben. Es soll jedoch hier in allgemeiner Form darauf eingegangen werden.

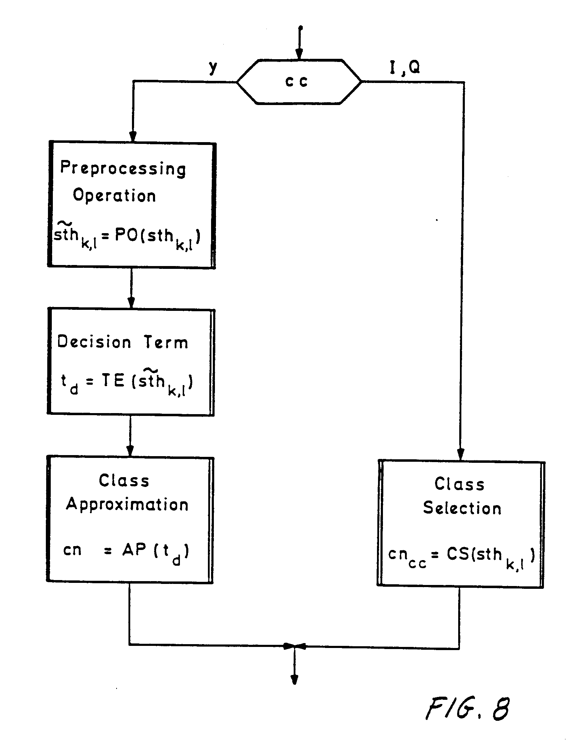

Den Funktionsablauf der Klassifikation zeigt Fig. 8. Zuerst wird in einer Entscheiderstufe auf Chromakomponenten I,Q und Luminanzkomponenten Y hin untersucht. Für die Chromakomponenten I,Q wird eine Klassenselektion durchgeführt anhand der Supra-Threshold-Information $sth_{k,1}$:

$$cn_{cc} = CS (sth_{k,1})$$

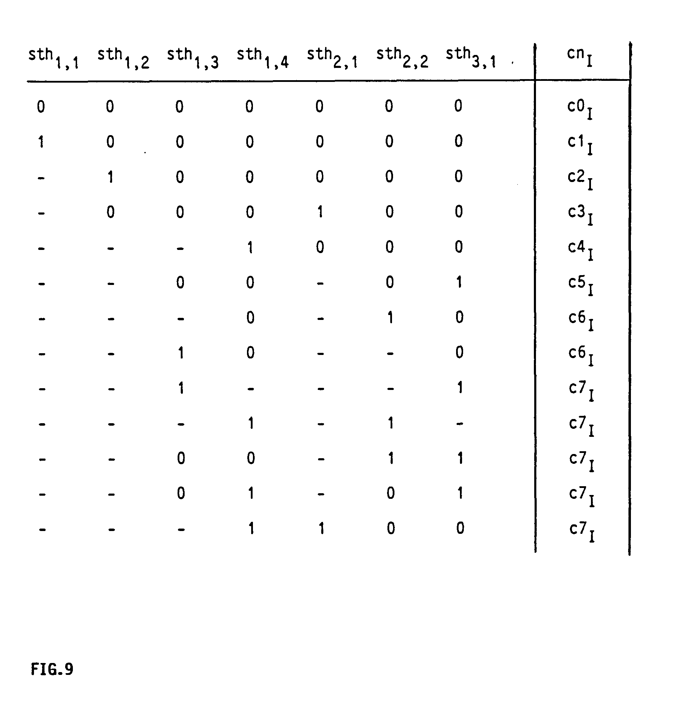

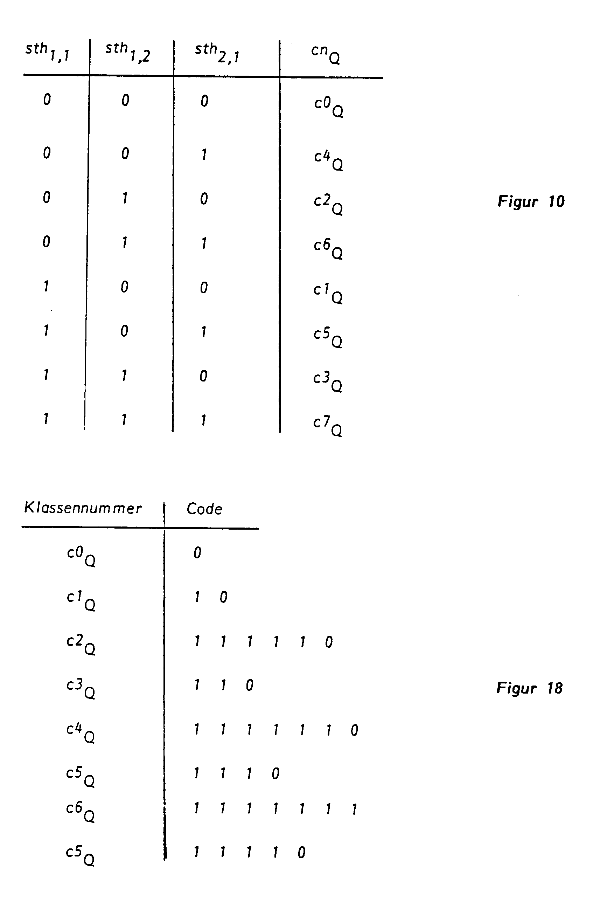

Als Klasse $cn_{cc}$ als Klassifikation für die Chromakomponenten wird jene ausgewählt, die alle Schwellwertvariablen $sth_{k,1}$ überdeckt. Diese Klassenselektion ist durch die Wahrheitstabellen gemäß den Figuren 9 und 10 beschreibbar.

Fig. 9 zeigt die Klassenselektion $cn_I$ für die I-Komponente in Abhängigkeit der Supra-Threshold-Informationen $sth_{k,1}$ und Fig. 10 die entsprechende Klassenselektion $cn_Q$ für die Q-Komponente. Für die Luminanzwerte Y erfolgt die Klassifikation in einem dreistufigen Prozeß:
- einer Preprocessing Operation

$$\widetilde{sth}_{k,1} = PO\ (sth_{k,1}),$$

die durch folgende Beziehungen beschreibbar ist:

$$\widetilde{sth}_{k,l} = \begin{cases} 0 & , \quad \displaystyle\sum_{m=1}^{3} \sum_{n=1}^{3} o_{m,n} - o_{2,2} < M \\[2em] o_{2,2} & , \quad \displaystyle\sum_{m=1}^{3} \sum_{n=1}^{3} o_{m,n} - o_{2,2} \geq M \end{cases}$$

$$o_{m,n} = \begin{cases} sth_{k1,l1} & , \quad k_1, l_1 = 1, \ldots, N \\[1em] 0 & , \quad k_1, l_1 = 0, N+1 \end{cases}$$

$$m, n = 1, 2, 3$$

$$k_1 = k - 2 + m$$

$$l_1 = l - 2 + n$$

$$k, l = 1, \ldots, N$$

$$M = \begin{cases} 0 & ; \quad k = 1, l = 1, \ldots, 4 \\ & \qquad l = 1, k = 1, \ldots, 4 \\[1em] 1 & ; \quad \text{for all other } k, l \end{cases}$$

$\widetilde{sh}_{k,1}$ bedeutet eine modifizierte Super-Threshold-Information,
- einer Termentscheidung

$$t_d = TE\ (sth_{k,l})$$

mit

$$
t_d = \begin{cases} 0, & \displaystyle\sum_q \sum_p \widetilde{sth}_{q,p} < NINT(tk_d/2) \\[2em] 1, & \displaystyle\sum_q \sum_p \widetilde{sth}_{q,p} \geq NINT(tk_d/2) \end{cases}
$$

$$
d = 1, \ldots, t_a
$$

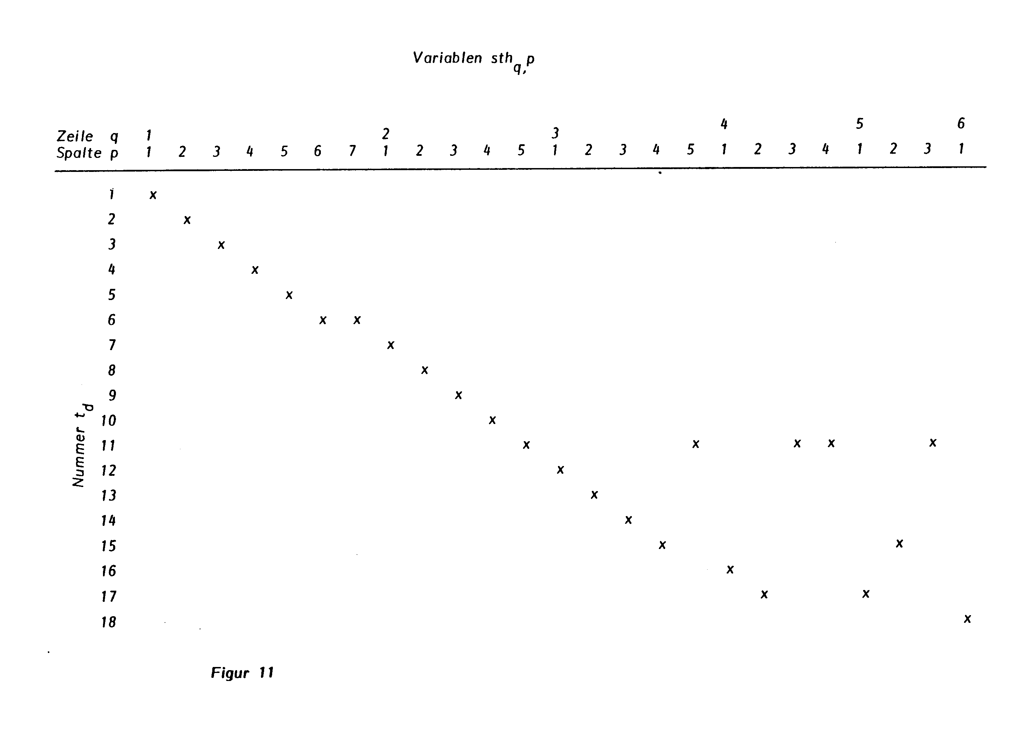

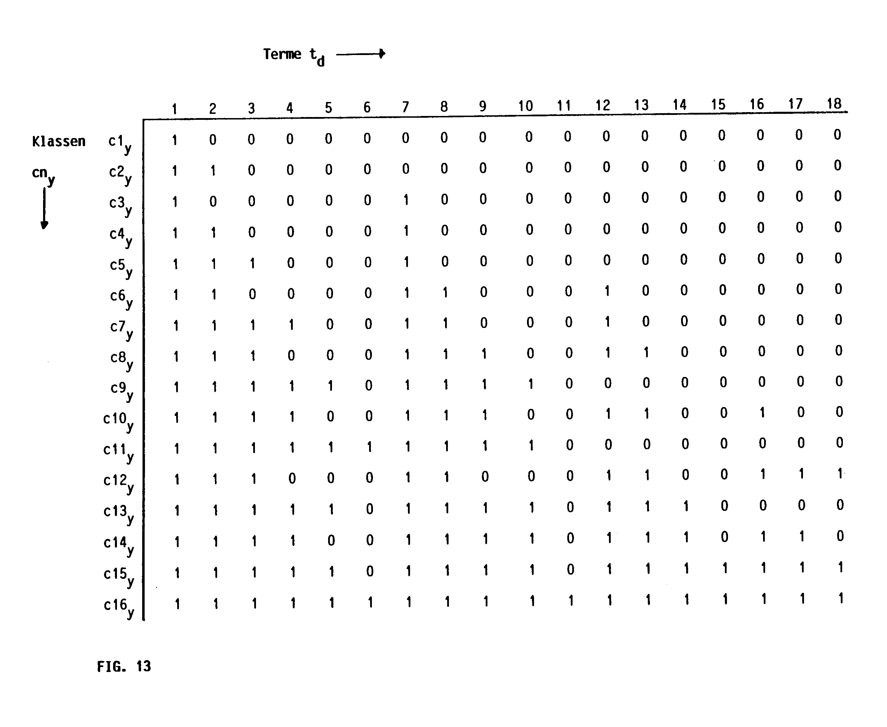

$t_d$ wird als Termvariable bezeichnet, wobei d eine Indexvariable ist, die von 1 bis $t_a$ = 18 läuft.9 ist ein Zeilenindex für sth und p ist ein entsprechender Spaltenindex. Fig. 11 zeigt die aus den Klassen abgeleiteten 18 Terme der Luminanzkomponente, wobei die Variablen $sth_{q,p}$ horizontal und die Termnummern $t_d$ vertikal aufgetragen sind. Die Abhängigkeit der Kardinalzahl $t_{kd}$ von den Termen $t_d$ bei der Entscheidung zeigt Fig. 12,
- einer "Class Approximation"
  $cn_y = AP(t_d)$

Diese "Class Approximation" selektiert die niedrigste Klassenselektionsnummer $cn_y$, die alle Terme $t_d$ enthält, gemäß Fig. 13.

Wie Fig. 13 zeigt, sind 16 Klassen aus 18 Termen für die Luminanzkomponente gebildet.

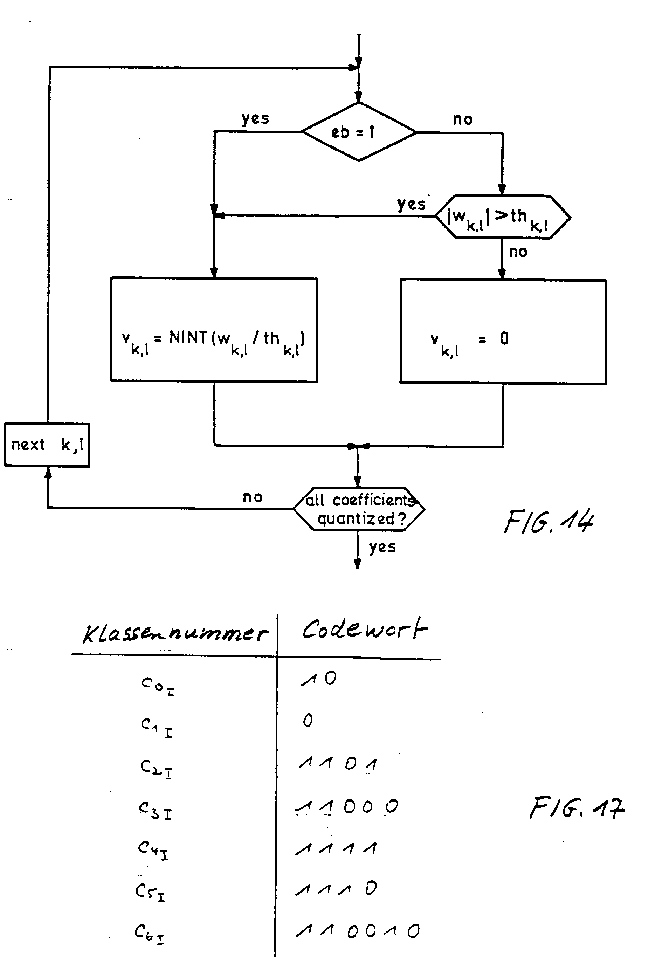

Der Ablauf der Blockquantisierung ist in Fig. 14 dargestellt. Zuerst wird festgestellt, ob ein Edgeblock eb detektiert wurde. Fall dies der Fall ist, wird eine Quantisierung gemäß der Beziehung

$V_{k,l} = NINT(w_{k,l} / th_{kl})$

vorgenommen. Wenn kein Edgeblock detektiert wurde, wird jeweils der Absolutbetrag der Spektralkoeffizienten mit den Wahrnehmbarkeitsschwellwerten $th_{k,l}$ verglichen. Werden diese Wahrnehmbarkeitsschwellwerte überschritten, erfolgt ebenfalls eine Quantisierung nach obiger Beziehung. Andernfalls wird die Quantisierung $V_{k,l}$ der Spektralkoeffizienten auf 0 gesetzt. Dieser Prozeß wird so lange durchgeführt, bis alle Spektralkoeffizienten quantisiert sind.

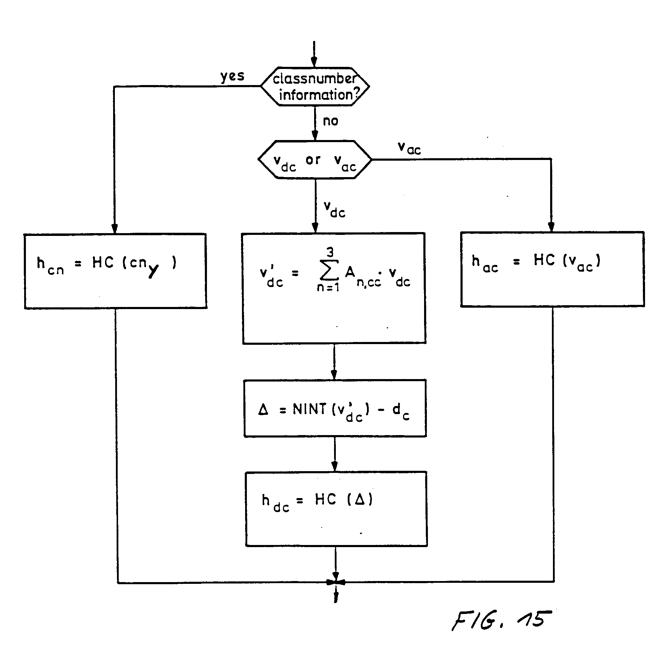

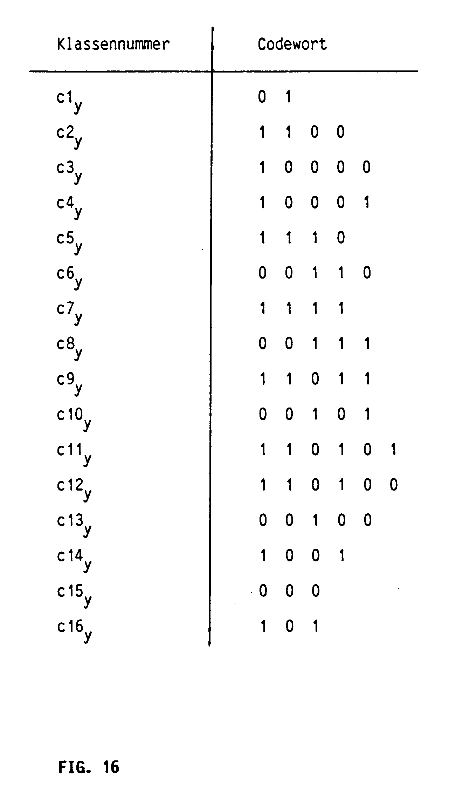

Der Ablauf der Transmission Coding ist in Fig. 15 dargestellt. Zuerst wird auf das Vorhandensein einer Klassennummer-Information cn geprüft. Ist eine solche vorhanden, wird eine Entropiecodierung $h_{cn}$ = HC $(cn_y)$ gemäß den Codiertabellen nach Fig. 16 - Entropiecodierung für die Luminanzkomponente Y in Abhängigkeit der Klassennummer $cn_y$-,Fig. 17 - Entropiecodierung für die Chromakomponente I in Abhängigkeit der Klassennummer $cn_l$ - und Fig. 18 - Entropiecodierung für die Chromakomponente Q in Abhängigkeit der Klassennummer $cn_Q$ - vorgenommen.

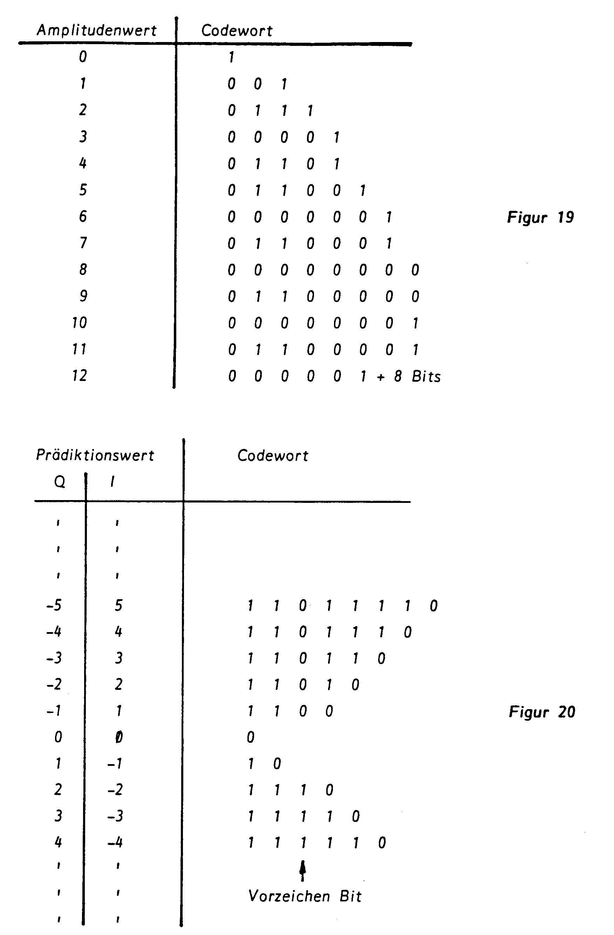

Wird keine Klassennummer-Information festgestellt, wird untersucht, ob DC oder AC-Koeffizienten $V_{dc}$ oder $V_{ac}$ vorliegen. Beim Auftreten von AC-Koeffizienten wird nach der Beziehung
$h_{ac} = HC(V_{ac})$
codiert. Die zugehörige Codiertabelle zeigt Fig. 19. Für die AC-Koeffizienten sind die Absolutbeträge der Amplitudenwerte angegeben. Es wird eine Hufmann-Codierung verwendet.

Beim Auftreten von DC-Koeffizienten wird eine zweidimensionale Prädiktion

$$
V'_{dc} = \sum_{n=1}^{3} A_{n,cc} \cdot V_{dc}
$$

vorgenommen, wie in Fig. 4 dargestellt. Die zugehörigen Prädiktionskoeffizienten wurden bereits im Zusammenhang mit Fig. 5 erläutert. Nach der Prädiktion erfolgt eine Berechnung gemäß:

$$
\Delta = NINT(v'_{dc}) - d_c
$$

mit $d_c$ =
Die Codierung
  $h_{dc} = HC(\Delta)$
wird gemäß der Codiertabelle nach Fig. 20 vorgenommen, die die Prädiktionswertcodierung für I und Q Komponenten zeigt.

Nachdem alle Blöcke codiert sind, wird von der eigentlichen Übertragung noch eine Übertragungsaufbereitung vorgenommen, d.h. eine Zusammenfassung aller codierten Daten zu einem kontinuierlichen Datenstrom (Transmission Sequenzing). Dazu können übliche Multiplextechniken herangezogen werden.

Zur Decodierung der Bilddaten auf der Empfangsseite sind die zuvor aufgeführten Maßnahmen invers auszuführen - inverse DCT, Decodierung gemäß den angeführten Codiertabellen.

## Patentansprüche

1. Verfahren zur Codierung von Bildsignalen unter Verwendung einer diskreten Transformation, beispielsweise der Diskreten Cosinus Transformation (DCT) zur Bildung von Spektralkoeffizienten, wobei Kantenstrukturen festgestellt werden und eine visuelle Wahrnehmbarkeits-Schwellwertentscheidung vorgenommen wird, gekennzeichnet durch folgende Maßnahmen:
   - blockweises Aufspalten der Spektralkoeffizienten in Gleich- und Wechselanteile, wobei die Gleichanteile jeweils mittlere Helligkeitswerte bezüglich der Luminanzkomponente und mittlere Farbsättigung bezüglich der Chromakomponenten für jeden Block von Spektralkoeffizienten darstellen und die Wechselanteile die jeweiligen örtlichen Abweichungen von diesen mittleren Werten innerhalb eines Blockes bilden,
   - Steuern der Schwellwertentscheidung bezüglich der Wechselanteile derart, daß eine Schwellenreduzierung bei der Schwellwertentscheidung vorgenommen wird, wenn Kantenstrukturen festgestellt wurden,
   - Quantisieren der durch die gesteuerte Schwellwertentscheidung erhaltenen Signale sowie der Gleichanteile,
   - Ermitteln von Prädiktionsfehlern für die quantisierten Gleichanteile,
   - Aufbereiten von Übertragungsdaten durch Codieren der quantisierten Prädiktionsfehler für die Gleichanteile und der quantisierten Wechselanteile jeweils durch einen für die Übertragung geeigneten datenreduzierenden Code.

2. Verfahren nach Anspruch 1, gekennzeichnet durch
   - Aufbereiten von Zusatzübertragungsdaten, wobei diese Zusatzübertragungsdaten aus Informationen über die Zugehörigkeit der Spektralkoeffizienten eines Blockes zu vorher festgelegten Klassen bestehen,
   - Ausdünnen der Übertragungsdaten anhand der Informationen über die Zugehörigkeit der Spektralkoeffizienten zu Klassen derart, daß die Übertragungsdaten nur jene Spektralkoeffizienten in einem Block berücksichtigen, die zu einer festgelegten Klasse gehören.

## Claims

1. A method for coding of image signals by using a discrete transformation, for example discrete cosine transformation (DCT) to form spectral coefficients, where edge structures are determined and a visual recognition threshold value determination is made, characterized by the following steps:
   - splitting the spectral coefficients block by block into constant and changing components, where each of the constant components represents mean brightness values in respect to the luminance component and mean color saturation in respect to the chroma component for each block of spectral coefficients, and where the changing components each form the respective local divergence from these mean values within a block,
   - controlling the threshold value determination in respect to the changing components in such a way that a threshold value reduction is made in the threshold value determination when edge structures are detected,
   - quantifying the signals obtained by means of the controlled threshold value determination as well as the constant components,
   - detecting prediction errors in regard to the quantified constant components,
   - preparing transmission data by coding the quantified prediction errors for the constant components and the quantified changing components, each one by means of a data-reducing code suitable for transmission.

2. A method in accordance with claim 1, characterized by
   - preparing additional transmission data, where these additional transmission data consist of information regarding the affiliation of the spectral coefficients of a block with previously determined classes,
- thinning out the transmission data on the basis of the information in respect to the affiliation of the spectral coefficients with classes in such a way that the transmission data only take those spectral coefficients in a block into account which are members of a fixed class.

**Revendications**

1.  Procédé de codage de signaux d'image en utilisant une transformation discrète, par exemple la transformation cosinus discrète (DCT) pour former des coefficients spectraux, dans lequel on détermine des structures de bord et l'on procède à une décision de valeur de seuil de perception visuelle, caractérisé par les dispositions suivantes:
    - partage par blocs des coefficients spectraux en composantes continues et alternatives, les composantes continues représentant à chaque fois des valeurs de brillance moyenne pour ce qui est de la composante luminance et la saturation de couleur moyenne pour ce qui est des composantes degré de teinte pour chaque bloc de coefficients spectraux, et les composantes alternatives constituant à chaque fois les écarts locaux par rapport à ces valeurs moyennes à l'intérieur d'un bloc;
    - commande de la décision de valeur de seuil pour ce qui est des composantes alternatives faite de manière qu'une réduction de seuil soit effectuée lors de la décision de valeur de seuil si des structures de bord ont été constatées,
    - quantification des signaux obtenus par la décision de valeur de seuil commandée, ainsi que des composantes continues,
    - élaboration d'erreurs de prédiction pour les composantes continues quantifiées,
    - préparation de données de transmission par codage des erreurs de prédiction quantifiées pour les composantes continues et par codage des composantes alternatives quantifiées, à chaque fois par un code réducteur de données convenant pour la transmission.

2.  Procédé selon revendication 1, caractérisé par
    - préparation de données de transmission supplémentaires, lesquelles sont constituées par des informations concernant l'appartenance des coefficients spectraux d'un bloc à des classes préalablement fixées;
    - départage des données de transmission en se reportant aux informations concernant l'appartenance des coefficients spectraux à des classes, de manière que les données de transmission ne prennent en compte que ceux des coefficients spectraux qui, dans un bloc, appartiennent à une classe fixée.

**FIG.1**

Block Decomposition

$$x_{i,j} = BC(cc, bn, N)$$

Discrete Cosinus Transform

$$w_{k,l} = DCT(x_{i,j})$$

*DC*

*AC*

Edge Detection

$$eb = ED(x_{i,j})$$

*QDC*

*PRED*

Spectral Thresholding

$$sth_{k,l} = TR(th_{k,l}, w_{k,l}, cc, eb)$$

*COD - QF*

Classification

$$cn_{cc} = CL(sth_{k,l}, cc)$$

Block Quantisition

$$x_{k,l} = BQ(w_{kl}, eb, th_{k,l})$$

Transmission Coding

$$h = TC(v_{k,l}, cn_{cc}, cc)$$

Y-Komponente $th_{k,l}$ $(0,Y)$

| | | | | | | | |
|---|---|---|---|---|---|---|---|
| 16 | 11 | 10 | 16 | 24 | 40 | 51 | 61 |
| 12 | 12 | 14 | 19 | 26 | 58 | 60 | 55 |
| 14 | 13 | 16 | 24 | 40 | 57 | 69 | 56 |
| 14 | 17 | 22 | 29 | 51 | 87 | 80 | 62 |
| 18 | 22 | 37 | 56 | 68 | 108 | 103 | 77 |
| 24 | 35 | 55 | 64 | 81 | 104 | 113 | 92 |
| 49 | 64 | 78 | 87 | 103 | 121 | 120 | 101 |
| 72 | 92 | 95 | 98 | 112 | 100 | 103 | 99 |

Figur 2a

$c_1$-Komponente $th_{k,l}$ $(0,I)$

| | | | | | | | |
|---|---|---|---|---|---|---|---|
| 35 | 63 | 85 | 92 | 104 | 103 | * | * |
| 74 | 90 | 118 | 130 | * | * | * | * |
| 88 | 120 | * | * | * | * | * | * |
| 120 | 148 | * | * | * | * | * | * |
| 160 | * | * | * | * | * | * | * |
| 184 | * | * | * | * | * | * | * |
| * | * | * | * | * | * | * | * |
| * | * | * | * | * | * | * | * |

Figur 2b

$c_2$-Komponente $th_{k,l}$ $(0, Q)$

| | | | | | | | |
|---|---|---|---|---|---|---|---|
| 41 | 64 | 70 | * | * | * | * | * |
| 70 | 97 | * | * | * | * | * | * |
| 81 | * | * | * | * | * | * | * |
| 106 | * | * | * | * | * | * | * |
| * | * | * | * | * | * | * | * |
| * | * | * | * | * | * | * | * |
| * | * | * | * | * | * | * | * |
| * | * | * | * | * | * | * | * |

Figur 2c

Figur 4

Blockgröße NxN

| | $A_1$ | $A_2$ | $A_3$ |
|---|---|---|---|
| Y | 5/8 | −3/8 | 3/4 |
| I | 1/2 | −1/4 | 3/4 |
| Q | 1/2 | 0 | 1/2 |

Figur 5

| d | $tk_d$ |
|---|---|
| 6 | 2 |
| 11 | 5 |
| 15 | 2 |
| 17 | 2 |
| rest | 1 |

Figur 12

FIG. 3

Operatorwindow Definition

$$a_{n,m} = OW \ (x_{i,j})$$

next i,j
i,j=2,...,7

Edgepointdetection

$$ep_{i,j} = EP \ (a_{n,m})$$

no — all points processed ?

yes

Edgeblockdetection

$$eb = EB \ (ep_{i,j})$$

*FIG. 6*

13

| $ep_{i,j}$ | $s_{m,n}$ ohne $s_{2,2}$ | | | | Winkel |
|---|---|---|---|---|---|
| 1 | 1  1  1<br>-1     1<br>-1 -1 -1 | -1 -1 -1<br>1     -1<br>1  1  1 | | | $-\pi/8$ |
| 2 | 1 -1 -1<br>1     -1<br>1  1  1 | -1  1  1<br>-1     1<br>-1 -1 -1 | 1  1  1<br>-1     1<br>-1 -1  1 | -1 -1 -1<br>1     -1<br>1  1 -1 | $-\pi/4$ |
| 3 | 1 -1 -1<br>1     -1<br>1  1 -1 | -1  1  1<br>-1     1<br>-1 -1  1 | | | $-3\pi/8$ |
| 4 | 1  1 -1<br>1     -1<br>1 -1 -1 | -1 -1  1<br>-1     1<br>-1  1  1 | | | $3\pi/8$ |
| 5 | 1  1  1<br>1     -1<br>1 -1 -1 | -1 -1 -1<br>-1     1<br>-1  1  1 | 1  1 -1<br>1     -1<br>-1 -1 -1 | -1 -1  1<br>-1     1<br>1  1  1 | $\pi/4$ |
| 6 | 1  1  1<br>1     -1<br>-1 -1 -1 | -1 -1 -1<br>-1     1<br>1  1  1 | | | $\pi/8$ |
| 0 | alle anderen Möglichkeiten | | | | keine Kante |

*Figur 7*

y    c c    I , Q

Preprocessing
Operation

$\widetilde{sth}_{k,l} = PO(sth_{k,l})$

Decision Term

$t_d = TE(\widetilde{sth}_{k,l})$

Class
Approximation

$cn = AP(t_d)$

Class
Selection

$cn_{cc} = CS(sth_{k,l})$

FIG. 8

| $sth_{1,1}$ | $sth_{1,2}$ | $sth_{1,3}$ | $sth_{1,4}$ | $sth_{2,1}$ | $sth_{2,2}$ | $sth_{3,1}$ | $cn_I$ |
|---|---|---|---|---|---|---|---|
| 0 | 0 | 0 | 0 | 0 | 0 | 0 | $c0_I$ |
| 1 | 0 | 0 | 0 | 0 | 0 | 0 | $c1_I$ |
| - | 1 | 0 | 0 | 0 | 0 | 0 | $c2_I$ |
| - | 0 | 0 | 0 | 1 | 0 | 0 | $c3_I$ |
| - | - | - | 1 | 0 | 0 | 0 | $c4_I$ |
| - | - | 0 | 0 | - | 0 | 1 | $c5_I$ |
| - | - | - | 0 | - | 1 | 0 | $c6_I$ |
| - | - | 1 | 0 | - | - | 0 | $c6_I$ |
| - | - | 1 | - | - | - | 1 | $c7_I$ |
| - | - | - | 1 | - | 1 | - | $c7_I$ |
| - | - | 0 | 0 | - | 1 | 1 | $c7_I$ |
| - | - | 0 | 1 | - | 0 | 1 | $c7_I$ |
| - | - | - | 1 | 1 | 0 | 0 | $c7_I$ |

FIG.9

| $sth_{1,1}$ | $sth_{1,2}$ | $sth_{2,1}$ | $cn_Q$ |
|:---:|:---:|:---:|:---:|
| 0 | 0 | 0 | $c0_Q$ |
| 0 | 0 | 1 | $c4_Q$ |
| 0 | 1 | 0 | $c2_Q$ |
| 0 | 1 | 1 | $c6_Q$ |
| 1 | 0 | 0 | $c1_Q$ |
| 1 | 0 | 1 | $c5_Q$ |
| 1 | 1 | 0 | $c3_Q$ |
| 1 | 1 | 1 | $c7_Q$ |

*Figur 10*

| Klassennummer | Code |
|:---:|:---|
| $c0_Q$ | 0 |
| $c1_Q$ | 1  0 |
| $c2_Q$ | 1  1  1  1  1  0 |
| $c3_Q$ | 1  1  0 |
| $c4_Q$ | 1  1  1  1  1  1  0 |
| $c5_Q$ | 1  1  1  0 |
| $c6_Q$ | 1  1  1  1  1  1  1 |
| $c5_Q$ | 1  1  1  1  0 |

*Figur 18*

## Variablen $sth_{q,p}$

| Zeile $q$ | 1 | | | | | | | 2 | | | | | 3 | | | | | 4 | | | | 5 | | | 6 |
|---|---|---|---|---|---|---|---|---|---|---|---|---|---|---|---|---|---|---|---|---|---|---|---|---|---|
| **Spalte $p$** | 1 | 2 | 3 | 4 | 5 | 6 | 7 | 1 | 2 | 3 | 4 | 5 | 1 | 2 | 3 | 4 | 5 | 1 | 2 | 3 | 4 | 1 | 2 | 3 | 1 |
| 1 | x | | | | | | | | | | | | | | | | | | | | | | | | |
| 2 | | x | | | | | | | | | | | | | | | | | | | | | | | |
| 3 | | | x | | | | | | | | | | | | | | | | | | | | | | |
| 4 | | | | x | | | | | | | | | | | | | | | | | | | | | |
| 5 | | | | | x | | | | | | | | | | | | | | | | | | | | |
| 6 | | | | | | x | x | | | | | | | | | | | | | | | | | | |
| 7 | | | | | | | | x | | | | | | | | | | | | | | | | | |
| 8 | | | | | | | | | x | | | | | | | | | | | | | | | | |
| 9 | | | | | | | | | | x | | | | | | | | | | | | | | | |
| 10 | | | | | | | | | | | x | | | | | | | | | | | | | | |
| 11 | | | | | | | | | | | | x | | | | | | x | | x | x | | | x | |
| 12 | | | | | | | | | | | | | x | | | | | | | | | | | | |
| 13 | | | | | | | | | | | | | | x | | | | | | | | | | | |
| 14 | | | | | | | | | | | | | | | x | | | | | | | | | | |
| 15 | | | | | | | | | | | | | | | | x | | | | | | | x | | |
| 16 | | | | | | | | | | | | | | | | | | x | | | | | | | |
| 17 | | | | | | | | | | | | | | | | | | | x | | | x | | | |
| 18 | | | | | | | | | | | | | | | | | | | | | | | | | x |

Nummer $t_p$

Figur 11

EP 0 283 715 B1

Terme $t_d$ ⟶

| | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| Klassen $c1_y$ | 1 | 0 | 0 | 0 | 0 | 0 | 0 | 0 | 0 | 0 | 0 | 0 | 0 | 0 | 0 | 0 | 0 | 0 |
| $cn_y$ $c2_y$ | 1 | 1 | 0 | 0 | 0 | 0 | 0 | 0 | 0 | 0 | 0 | 0 | 0 | 0 | 0 | 0 | 0 | 0 |
| $c3_y$ | 1 | 0 | 0 | 0 | 0 | 0 | 1 | 0 | 0 | 0 | 0 | 0 | 0 | 0 | 0 | 0 | 0 | 0 |
| $c4_y$ | 1 | 1 | 0 | 0 | 0 | 0 | 1 | 0 | 0 | 0 | 0 | 0 | 0 | 0 | 0 | 0 | 0 | 0 |
| $c5_y$ | 1 | 1 | 1 | 0 | 0 | 0 | 1 | 0 | 0 | 0 | 0 | 0 | 0 | 0 | 0 | 0 | 0 | 0 |
| $c6_y$ | 1 | 1 | 0 | 0 | 0 | 0 | 1 | 1 | 0 | 0 | 0 | 1 | 0 | 0 | 0 | 0 | 0 | 0 |
| $c7_y$ | 1 | 1 | 1 | 1 | 0 | 0 | 1 | 1 | 0 | 0 | 0 | 1 | 0 | 0 | 0 | 0 | 0 | 0 |
| $c8_y$ | 1 | 1 | 1 | 0 | 0 | 0 | 1 | 1 | 1 | 0 | 0 | 1 | 1 | 0 | 0 | 0 | 0 | 0 |
| $c9_y$ | 1 | 1 | 1 | 1 | 1 | 0 | 1 | 1 | 1 | 1 | 0 | 0 | 0 | 0 | 0 | 0 | 0 | 0 |
| $c10_y$ | 1 | 1 | 1 | 1 | 0 | 0 | 1 | 1 | 1 | 0 | 0 | 1 | 1 | 0 | 0 | 1 | 0 | 0 |
| $c11_y$ | 1 | 1 | 1 | 1 | 1 | 1 | 1 | 1 | 1 | 1 | 0 | 0 | 0 | 0 | 0 | 0 | 0 | 0 |
| $c12_y$ | 1 | 1 | 1 | 0 | 0 | 0 | 1 | 1 | 0 | 0 | 0 | 1 | 1 | 0 | 0 | 1 | 1 | 1 |
| $c13_y$ | 1 | 1 | 1 | 1 | 1 | 0 | 1 | 1 | 1 | 1 | 0 | 1 | 1 | 1 | 0 | 0 | 0 | 0 |
| $c14_y$ | 1 | 1 | 1 | 1 | 0 | 0 | 1 | 1 | 1 | 1 | 0 | 1 | 1 | 1 | 0 | 1 | 1 | 0 |
| $c15_y$ | 1 | 1 | 1 | 1 | 1 | 0 | 1 | 1 | 1 | 1 | 0 | 1 | 1 | 1 | 1 | 1 | 1 | 1 |
| $c16_y$ | 1 | 1 | 1 | 1 | 1 | 1 | 1 | 1 | 1 | 1 | 1 | 1 | 1 | 1 | 1 | 1 | 1 | 1 |

FIG. 13

FIG. 14

| Klassennummer | Codewort |
|---|---|
| $C_{0_I}$ | 10 |
| $C_{1_I}$ | 0 |
| $C_{2_I}$ | 1101 |
| $C_{3_I}$ | 11000 |
| $C_{4_I}$ | 1111 |
| $C_{5_I}$ | 1110 |
| $C_{6_I}$ | 110010 |

FIG. 17

20

$$h_{cn} = HC (cn_y)$$

classnumber information?

yes    no

$v_{dc}$ or $v_{ac}$

$v_{ac}$

$v_{dc}$

$$v'_{dc} = \sum_{n=1}^{3} A_{n,cc} \cdot v_{dc}$$

$$\Delta = NINT (v'_{dc}) - d_c$$

$$h_{dc} = HC (\Delta)$$

$$h_{ac} = HC (v_{ac})$$

FIG. 15

| Klassennummer | Codewort |
|---|---|
| $c1_y$ | 0 1 |
| $c2_y$ | 1 1 0 0 |
| $c3_y$ | 1 0 0 0 0 |
| $c4_y$ | 1 0 0 0 1 |
| $c5_y$ | 1 1 1 0 |
| $c6_y$ | 0 0 1 1 0 |
| $c7_y$ | 1 1 1 1 |
| $c8_y$ | 0 0 1 1 1 |
| $c9_y$ | 1 1 0 1 1 |
| $c10_y$ | 0 0 1 0 1 |
| $c11_y$ | 1 1 0 1 0 1 |
| $c12_y$ | 1 1 0 1 0 0 |
| $c13_y$ | 0 0 1 0 0 |
| $c14_y$ | 1 0 0 1 |
| $c15_y$ | 0 0 0 |
| $c16_y$ | 1 0 1 |

FIG. 16

| Amplitudenwert | Codewort |
|---|---|
| 0 | 1 |
| 1 | 0 0 1 |
| 2 | 0 1 1 1 |
| 3 | 0 0 0 0 1 |
| 4 | 0 1 1 0 1 |
| 5 | 0 1 1 0 0 1 |
| 6 | 0 0 0 0 0 0 1 |
| 7 | 0 1 1 0 0 0 1 |
| 8 | 0 0 0 0 0 0 0 0 |
| 9 | 0 1 1 0 0 0 0 0 |
| 10 | 0 0 0 0 0 0 0 1 |
| 11 | 0 1 1 0 0 0 0 1 |
| 12 | 0 0 0 0 0 1 + 8 Bits |

**Figur 19**

| Prädiktionswert Q | I | Codewort |
|---|---|---|
| ' | ' | |
| ' | ' | |
| ' | ' | |
| -5 | 5 | 1 1 0 1 1 1 1 0 |
| -4 | 4 | 1 1 0 1 1 1 0 |
| -3 | 3 | 1 1 0 1 1 0 |
| -2 | 2 | 1 1 0 1 0 |
| -1 | 1 | 1 1 0 0 |
| 0 | 0 | 0 |
| 1 | -1 | 1 0 |
| 2 | -2 | 1 1 1 0 |
| 3 | -3 | 1 1 1 1 0 |
| 4 | -4 | 1 1 1 1 1 0 |
| ' | ' | |
| ' | ' | Vorzeichen Bit |
| ' | ' | |

**Figur 20**

23